# EUROPEAN PATENT SPECIFICATION

(11) **EP 3 769 907 B1**
(45) Date of publication and mention of the grant of the patent: **29.11.2023**
(21) Application number: 20187736.2
(22) Date of filing: 24.07.2020
(51) Int. Cl.: B23Q 1/62, B23Q 7/04

(54) **MACHINE TO PROCESS SECTION BARS MADE OF ALUMINIUM, LIGHT ALLOYS, PVC OR THE LIKE**
MASCHINE ZUR BEARBEITUNG VON PROFILSTANGEN AUS ALUMINIUM, LEICHTMETALLLEGIERUNGEN, PVC ODER DERGLEICHEN
MACHINE POUR TRAITER DES BARRES DE SECTION EN ALUMINIUM, ALLIAGES LÉGERS, PVC OU SIMILAIRE

(30) Priority: 26.07.2019 IT 201900013017
(43) Date of publication of application: 27.01.2021
(73) Proprietor: F.O.M. Industrie S.r.l., 47841 Cattolica (IT)
(72) Inventor: LATTANZI, Lorenzo, 61121 Pesaro (PU) (IT)
(74) Representative: Studio Torta S.p.A.

(56) References cited:
- EP-A1- 1 555 084
- EP-A1- 3 175 950
- EP-A1- 3 398 713

## Description

### TECHNICAL FIELD

The present invention relates to a machine to process section bars made of aluminium, light alloys, PVC or the like.

### BACKGROUND ART

In the field of processing section bars made of aluminium, light alloys, PVC or the like, it is known to provide a machine of the type comprising an elongated base; a feeding unit for holding at least one section bar at its rear end and for feeding the section bar along the base; and a milling unit mounted along the base to carry out chip removal machining of the section bar itself.

The machine furthermore comprises a bridge crane movable along the base; and a cutting device mounted on the bridge crane to cut the section bar into two pieces.

The feeding unit cooperates with a plurality of gripping devices, each of which normally comprises a horizontal vice and a vertical vice configured to lock the section in two directions orthogonal to one another and to a feeding direction of the section bar along the base.

Each vice comprises two jaws movable relative to one another between a clamping position and a release position of the section bar.

The known machines to process section bars made of aluminium, light alloys, PVC or the like, of the type described above have some drawbacks mainly deriving from the fact that the two jaws of the horizontal vices are unable to adapt to the shape of the section bars and therefore have relatively reduced flexibility. Such a machine is known from Patent Document EP 3 398 713 A1, on which the preamble of the appended claim 1 is based.

### DISCLOSURE OF INVENTION

The object of the present invention is to provide a machine to process section bars made of aluminium, light alloys, PVC or the like which is free from the drawbacks described above and that is simple and inexpensive to implement.

According to the present invention, there is provided a machine to process section bars made of aluminium, light alloys, PVC or the like as claimed in the attached claims.

### BRIEF DESCRIPTION OF THE DRAWINGS

The present invention will now be described with reference to the attached drawings, which illustrate a non-limiting embodiment, wherein:
Figure 1 is a schematic perspective view, with parts removed for clarity, of a preferred embodiment of the machine to process section bars made of aluminium, light alloys, PVC or the like of the present invention;
Figure 2 is a schematic perspective view, with parts removed for clarity, of a detail of the machine of Figure 1;
Figures 3 and 4 are two schematic perspective views, with parts removed for clarity, of a first detail of Figure 2;
Figure 5 is a schematic side view, with parts removed for clarity, of the detail of Figures 3 and 4;
Figure 6 is a schematic perspective view, with parts removed for clarity, of a first detail of Figures 3, 4, and 5;
Figure 7 is a schematic section, with parts removed for clarity, of a second detail of Figures 3, 4, and 5;
Figures 8 and 9 are two schematic perspective views, with parts removed for clarity, of a second detail of Figure 2 shown in two different operating positions.

### BEST MODE FOR CARRYING OUT THE INVENTION

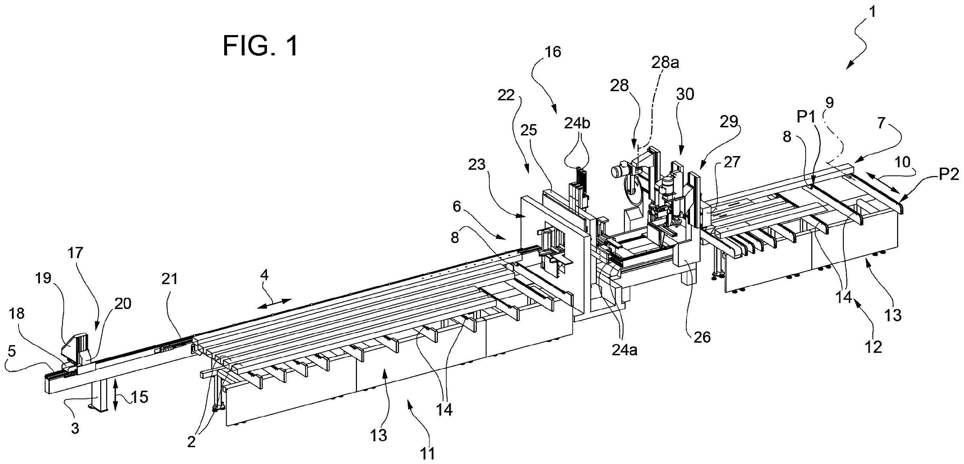

With reference to Figure 1, number 1 denotes, as a whole, a machine to process section bars 2 made of aluminium, light alloys, PVC or the like having an elongated shape.

The machine 1 comprises an elongated base 3, which extends in a horizontal direction 4, has a portal-like shape, and is provided with a longitudinal guide member 5 parallel to the direction 4.

The machine 1 furthermore comprises two roller support devices 6, 7 mounted in succession along the base 3. Each device 6, 7 has a plurality of lower rollers 8, which are mounted to rotate around respective rotation axes 9 substantially parallel to one another and to a horizontal direction 10 transverse to the direction 4, and define a lower support plane P1 for at least one section bar 2.

The machine 1 is furthermore provided with a loading station 11 to load the section bars 2 to be processed on the device 6 and with an unloading station 12 to unload the section bars 2 that have just been processed from the device 7.

Each station 11, 12 comprises a belt conveyor 13, which faces the respective device 6, 7 in the direction 10, and in turn comprises a plurality of conveyor belts 14, which are parallel to one another and to the direction 10, and define a lower support plane P2 for at least one section bar 2.

The rollers 8 are movable in a vertical direction 15 orthogonal to the directions 4 and 10 between a raised operating position, in which the plane P1 extends above the plane P2, and a lowered rest position, in which the plane P1 extends below the plane P2.

The machine 1 has, furthermore, a processing station 16, which is provided along the base 3 between the stations 11, 12, and extends between the devices 6, 7.

The section bars 2 are fed along the plane P1 and through the station 16 in the direction 4 by a feeding device 17 comprising a first horizontal slide 18 coupled in a sliding manner to the guide member 5 to perform, with respect to the base 3, rectilinear movements along the guide member 5 in the direction 4; a second horizontal slide 19 coupled in a sliding manner to the horizontal slide 18 to perform, with respect to the horizontal slide 18, rectilinear movements in the direction 10; and a vertical slide 20 coupled in a sliding manner to the horizontal slide 19 to perform, with respect to the horizontal slide 19, rectilinear movements in the direction 15.

The vertical slide 20 has an elongated shape, extends in the direction 4, and supports a gripping member 21 connected to a free end of the vertical slide 20.

The member 21 is coupled in a rotatable manner to the vertical slide 20 to rotate, with respect to the vertical slide 20, about a rotation axis (not shown) parallel to the direction 4, and comprises two jaws (not shown) movable between a gripping position and a release position of the section bars 2.

The station 16 is provided with a milling unit 22 comprising an annular frame 23, which is mounted between the stations 11, 12, and extends around a feeding path of the section bars 2; and a plurality of tool-holding spindles 24, which are mounted parallel to the directions 10 and 15, and are each adapted to receive and hold a respective milling tool of a known type and not shown.

The spindles 24 are mounted on the frame 23 by interposition of a cross slide 25, which has an annular shape, and is configured to allow the spindles 24 to move, with respect to the base 3, in the directions 10 and 15.

The spindles 24 parallel to the direction 10 (hereinafter denoted with 24a) are coupled to the cross slide 25 to move, with respect to the cross slide 25, independently of each other in the direction 10; and the spindles 24 parallel to the direction 15 (hereinafter denoted with 24b) are coupled to the cross slide 25 to move, with respect to the cross slide 25, independently of each other in the direction 15.

The station 16 is furthermore provided with a bridge crane 26, which is mounted between the milling unit 22 and the station 12, and is movable, with respect to the base 3, between the devices 6, 7 and the stations 11, 12 in the direction 4.

The bridge crane 26 comprises a horizontal crosspiece 27, which extends above the plane P in the direction 10, and supports, in this case, a cutting device 28 to cut the section bars 2, an end milling device 29 to process the ends of the section bars 2, and a drilling device 30 to drill the ends of the section bars 2.

The devices 28, 29, 30 are mounted on the same face of the bridge crane 26, and face the milling unit 22.

With regard to the foregoing, it should be specified that the device 28 is mounted to rotate around a rotation axis 28a parallel to the direction 15.

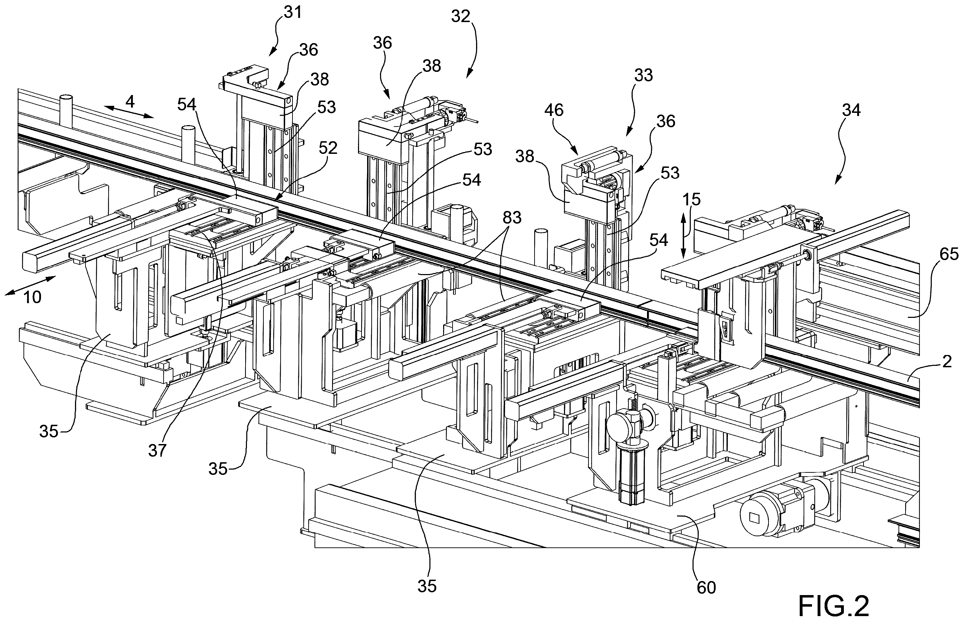

As illustrated in Figure 2, the station 16 is provided, in this case, with four gripping devices 31, 32, 33, 34 mounted in succession along the base 3 starting from station 11.

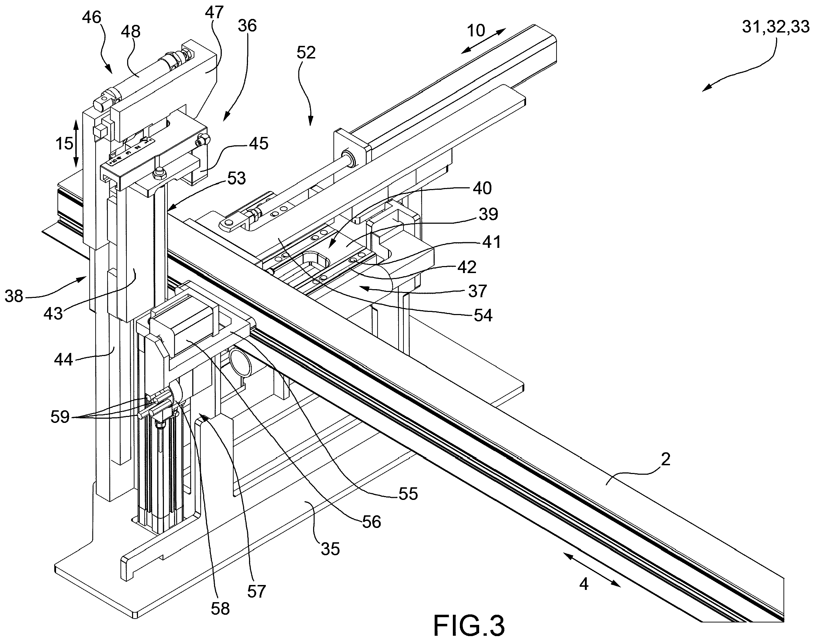

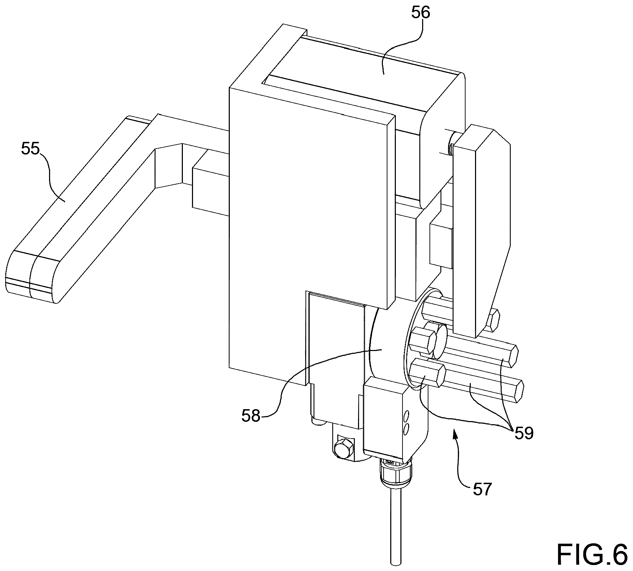

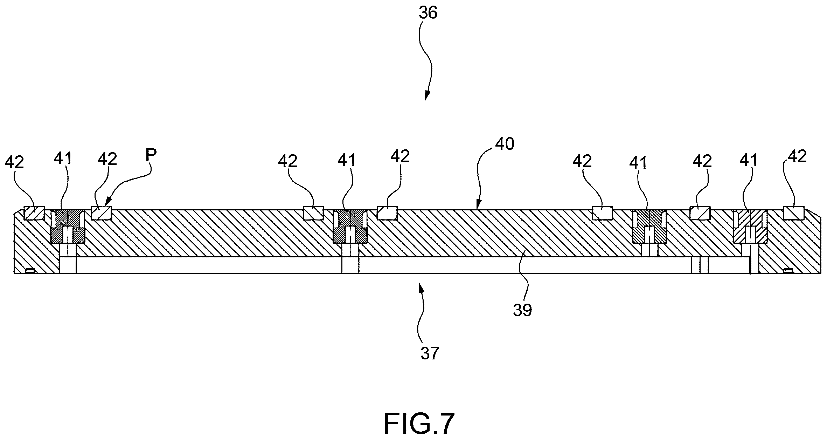

With reference to Figures 3, 4, 5, 6, and 7, each device 31, 32, 33 comprises a horizontal slide 35 coupled to the base 3 in a sliding manner to perform, with respect to the base 3, rectilinear movements in the direction 4 in a manner independent of the slides 35 of the other devices 31, 32, 33.

The slide 35 supports a vertical vice 36 comprising a lower jaw 37 and an upper jaw 38 perpendicular to the direction 15.

The jaw 37 comprises a flat plate 39, which is made of a substantially rigid material, for example a plastic or a metal material, is limited by an upper face 40 which is substantially horizontal and perpendicular to the direction 15, and is provided with a plurality of pneumatic nozzles 41 of known type fed with pressurized air by a pneumatic circuit (not shown) obtained through the plate 39.

Each nozzle 41 opens outwards in the area of the face 40, and is configured to generate an air jet at least partially parallel to the face 40 so as to remove chips and/or machining scraps generated by the unit 22 and by devices 28, 29, 30 in the direction 10.

The jaw 37 furthermore comprises a plurality of supporting strips 42 substantially parallel to one another, which extend in the direction 10, are housed in respective cavities formed on the face 40, and project upwards from the plate 39 to define a support plane P parallel to the face 40.

The strips 42 are made of a deformable material, for example a polyurethane material, configured to deform, absorb chips and/or processing scraps trapped between the section bars 2 and the strips 42, and prevent the formation of scratches and/or grooves on the faces of the section bars 2 arranged in contact with the jaw 37.

The jaw 38 comprises a vertical slide 43, which is coupled in a sliding manner to a vertical upright 44 projecting upwards from the slide 35 in the direction 15, and supports a locking plate 45 substantially L-shaped.

The plate 45 is moved by the slide 43 in the direction 15 between a clamping position of the section bar 2 against the jaw 37 and a release position, and is, moreover, coupled in a sliding manner to the slide 43 to perform, with respect to the slide 43, straight movements in the direction 10.

The plate 45 is moved in the direction 10 by a driving device 46 comprising a fork 47, which is mounted at an upper end of the upright 44 with its concavity facing downward, and is slidably coupled to the upright 44 to perform, with respect to the upright 44, rectilinear movements in the direction 10 under the thrust of an actuator cylinder 48.

The cylinder 48 cooperates with an end-of-stroke device 49 comprising a rotating disk 50, which is coupled in a rotatable manner to the upright 44 to rotate intermittently, with respect to the upright 44, around a rotation axis parallel to the direction 10, and has a plurality of end-of-stroke pins 51, which are uniformly distributed around the rotation axis of the disc 50, protrude from the disc 50 in the direction 10, and have different lengths from one another in the direction 10.

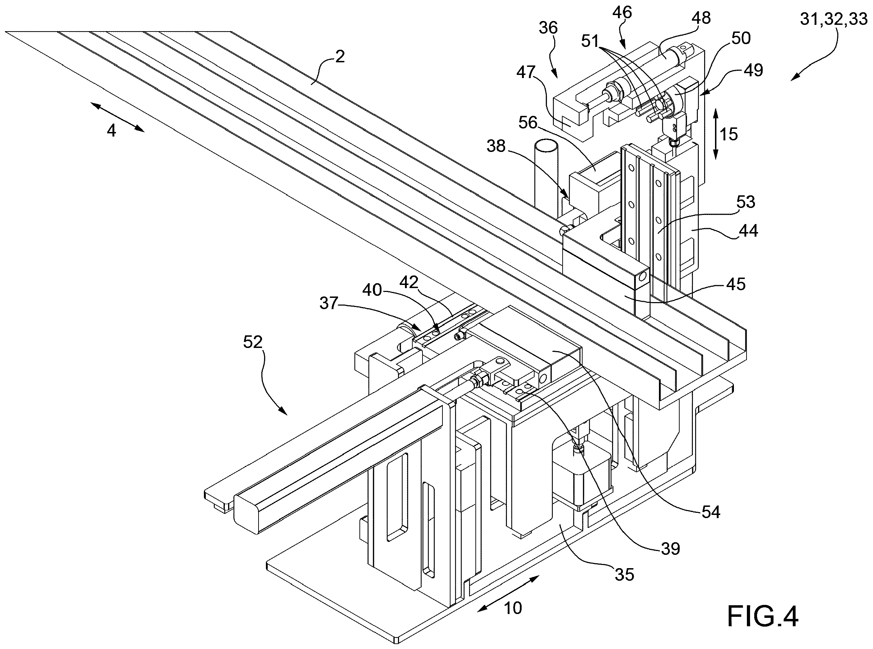

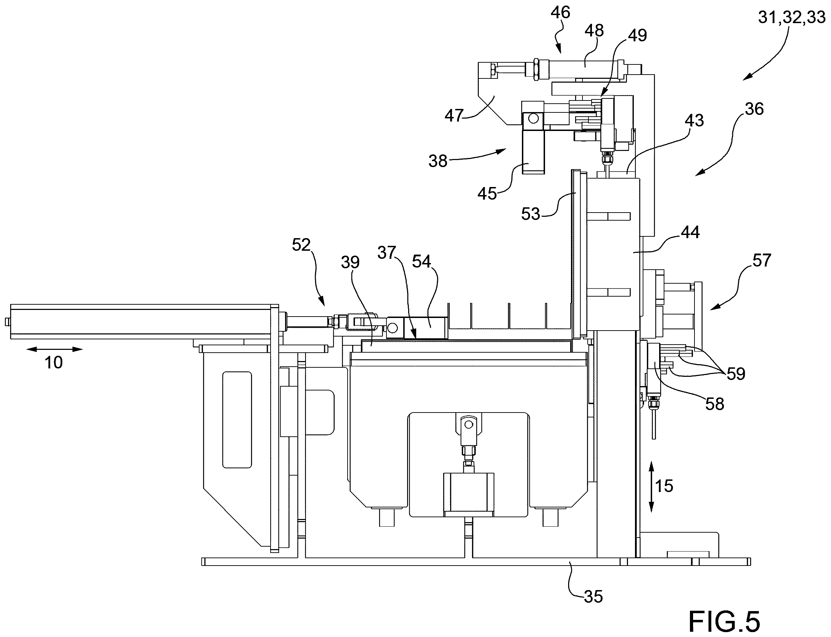

In use, the plate 45 is raised in the direction 15 by the slide 43 so as to engage the fork 47; the fork 47 is moved in the direction 10 to selectively control the position of the plate 45 according to the configuration of the section bar 2 being machined (Figures 4 and 5); and the slide 43 is lowered to disengage the plate 45 from the fork 47.

With regard to the foregoing, it should be noted that the plate 45 is releasably locked on the slide 43 in the direction 10 by means of a ball locking device not shown.

The slide 35 supports, furthermore, a horizontal vice 52 comprising a fixed jaw 53 and a jaw 54 movable in the direction 10 between a clamping position and a release position to clamp and release the section bars 2.

The jaw 53 extends perpendicularly to the direction 10, is completely equivalent to the jaw 37, and cooperates with a lateral pad 55 mounted alongside the jaw 53.

The pad 55 extends in the direction 4, and is movable in the direction 10 between an operating position, in which the pad 55 is arranged substantially in contact with the section bar 2 to stabilize the clamping of the section bar 2 between the jaws 53 and 54, and a rest position.

The pad 55 is moved in the direction 10 by an actuator cylinder 56, which is mounted on the upright 44 parallel to direction 10, and cooperates with an end-of-stroke device 57. The device 57 comprises a rotating disk 58, which is mounted to rotate intermittently around a rotation axis parallel to the direction 10, and has a plurality of end-of-stroke pins 59, which are uniformly distributed around the rotation axis of the disk 58, protrude from the disk 58 in the direction 10, and have different lengths from one another in the direction 10.

According to an alternative not shown, the actuator cylinder 56 and the limit-stroke device 57 are eliminated and replaced with an electric motor adapted to selectively control the position of the pad 55 in the direction 10.

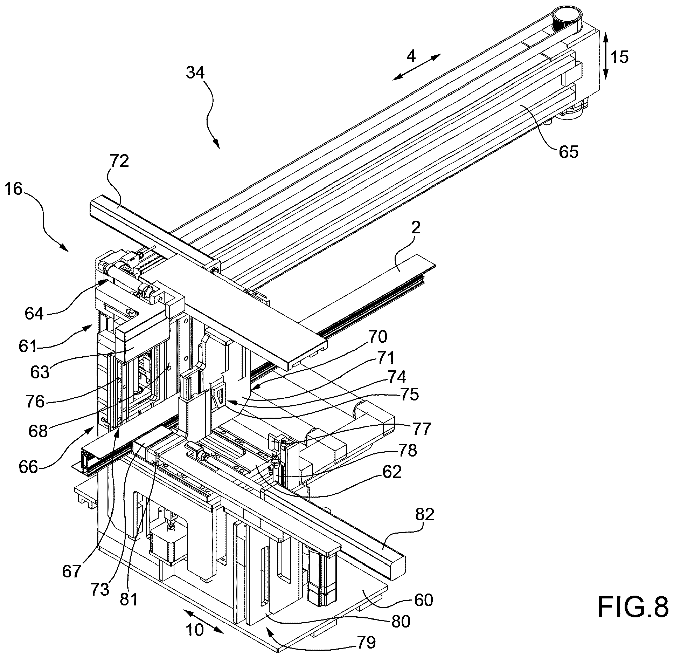

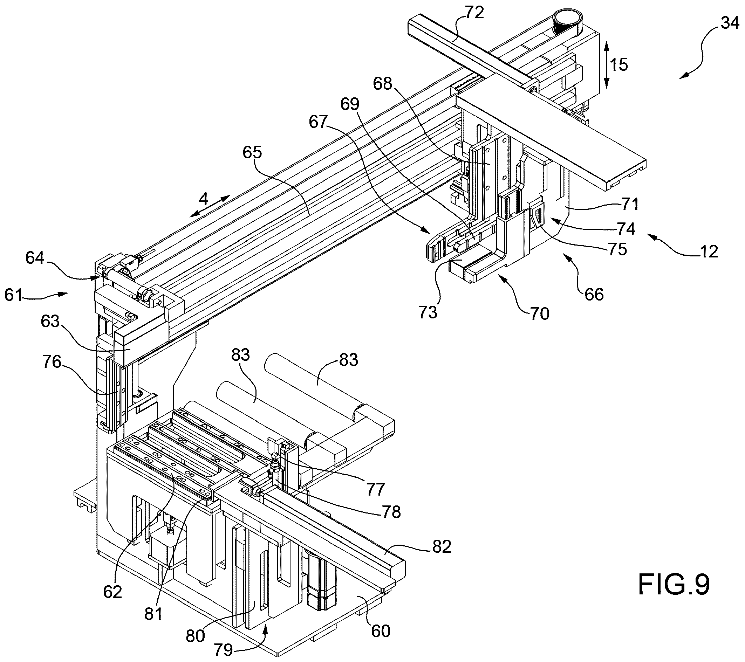

As illustrated in Figures 8 and 9, the device 34 comprises a horizontal slide 60 coupled in a sliding manner to the base 3 to perform, with respect to the base 3, rectilinear movements in the direction 4 independently of the slides 35 of the devices 31, 32, 33.

The slide 60 supports a vertical vice 61, which is completely equivalent to the vices 36, and comprises a lower jaw 62 completely equivalent to the jaws 37 and an upper jaw 63 completely equivalent to the jaws 38.

The jaw 63 is moved in the direction 10 by a driving device 64 which is completely equivalent to the device 46.

The slide 60 is provided with a horizontal crosspiece 65, which extends in the direction 4, and supports a horizontal vice 66 comprising a first jaw 67, which is L-shaped, and is coupled in a sliding manner to the crosspiece 65 to perform straight movements along the crosspiece 65 in the direction 4.

The jaw 67 comprises a plate 68 completely equivalent to the plates 39, and is provided with a pad 69, which defines part of the plate 68, is completely equivalent to the pads 55, and cooperates with an end-of-stroke device completely equivalent to the device 57.

The vice 66 furthermore comprises a second jaw 70 comprising, in turn, a horizontal slide 71 coupled in a sliding manner to the jaw 67 to perform, with respect to the jaw 67 and under the thrust of an actuator cylinder 72, rectilinear movements in the direction 10, and a pad 73 coupled in a sliding manner to the slide 71 to move, with respect to the slide 71, in the direction 15 according to the shape of the section bar 2 being processed.

In other words, the pad 73 is movable with respect to the jaw 67 in the direction 15.

The pad 73 is locked in the direction 15 by a locking device 74 comprising a hooking plate 75 slidably coupled to the slide 71 to move, with respect to the slide 71, in the direction 4.

The plate 75 is moved, and normally maintained, in a locking position, in which a toothed edge of the plate 75 engages a toothed edge of the pad 73, by at least one spring (not shown) interposed between the slide 71 and the plate 75.

The vice 66 is movable along the crosspiece 65 between a first operating position (Figure 8), in which the vice 66 is arranged in the machining station 16 and cooperates with the vice 61 and with the devices 31, 32, 33 to hold the section bars 2 during the processing thereof, and a second operating position (Figure 9), in which the vice 66 is arranged in the unloading station 12 to release the section bars 2 that have just been processed onto the respective belt conveyor 13.

When the vice 66 is placed in its first operative position: the jaw 67 cooperates with a plate 76 fixed to the slide 60, completely similar to the plate 68, and coplanar with the plate 68;
the plate 75 is movable in a release position of the pad 73 under the thrust of a release wedge 77 movable in the direction 15 between a lowered rest position and a raised operating position under the thrust of an actuator cylinder 78 mounted on the slide 60 parallel to direction 15; and
the pad 73 is movable in the direction 15 under the thrust of a lifting device 79.

The device 79 comprises a vertical slide 80 coupled to the slide 60 to move, with respect to the slide 60, in the direction 15; and an engagement fork 81, which extends in the direction 10, and is coupled to the slide 80 to move, with respect to the slide 80, in the direction 10 under the thrust of an actuator cylinder 82 mounted on the slide 80 parallel to the direction 10.

In use, when the vice 66 is placed in its first operating position, the jaw 70 is moved to a clamping position of the section bars 2 by combining the action of the actuator cylinder 72 with the action of the actuator cylinder 82.

With regard to the foregoing, it should be noted that each lower jaw 37, 62 of the vices 36, 61 is movable in the direction 15 to lower and release the section bars 2 onto at least one roller 83 of the respective device 31, 32, 33, 34. Alternatively, the jaws 37, 62 are fixed in the direction 15 and each roller 83 is movable in the direction 15 to disengage the section bars 2 from the respective jaw 37, 62.

## Claims

1. A machine to process section bars (2), in particular made of aluminium, light alloys, PVC or the like, the machine comprising an elongated base (3) extending in a first direction (4); at least one processing station (16), which is provided along the base (3) and is provided with at least one operating unit (22, 28, 29, 30) to process the section bars (2); and at least one gripping device (34) to hold at least one section bar (2), the gripping device (34) comprising a first clamping vice (66) comprising, in turn, a first jaw (67) and a second jaw (70), which are movable relative to one another in a second direction (10), which is transverse to the first direction (4), between a clamping position and a release position to clamp and release the section bar (2); and being **characterized in that** it further comprises a driving device (79) to move the second jaw (70) with respect to the first jaw (67) in a third direction (15), which is orthogonal to said first and second directions (4, 10); the driving device (79) comprising a gripping member (81), which is movable between an operating position, in which the gripping member (81) engages the second jaw (70), and a rest position, in which the gripping member (81) disengages the second jaw (70), and driving means (80) to move the gripping member (81) and, hence, the second jaw (70) in the third direction (15).

2. A machine according to claim 1, wherein the gripping member (81) is movable in the second direction (10) between the operating position and the release position.

3. A machine according to any one of the preceding claims, wherein the driving device (79) is mounted in the processing station (16).

4. A machine according to any one of the preceding claims and further comprising a discharge station (12), which is obtained along the base (3) so as to discharge the section bars (2) from the first clamping vice (66); the first clamping vice (66) being movable along the base (3) between the processing station (16) and the discharge station (12).

5. A machine according to any one of the preceding claims, wherein the gripping device (34) further comprises a second clamping vice (61) comprising, in turn, a third jaw (62) and a fourth jaw (63), which are movable relative to one another in the third direction (15) between a clamping position and a release position to clamp and release the section bar (2).

6. A machine according to claim 5, wherein the second clamping vice (61) is mounted in the processing station (16).

7. A machine according to claim 5 or 6, wherein the second clamping vice (61) cooperates with a bearing roller (83) for the section bars (2); the third jaw (62) and the bearing roller (83) being movable relative to one another transversely to the first direction (4).

8. A machine according to any one of the preceding claims, wherein said first and second directions (4, 10) are substantially horizontal and said third direction (15) is substantially vertical.

9. A machine according to any one of the preceding claims and further comprising a locking device (74) to lock the second jaw (70) in the third direction (15).

10. A machine according to claim 9, wherein the locking device (74) comprises a locking member (75), which is movable between a locking position and a release position to lock and release the second jaw (70), and further driving means (77, 78) to move the locking member (75) between its locking and release positions.

11. A machine according to claim 10, wherein the locking member (75) is mounted on the first clamping vice (66).

12. A machine according to claim 10 or 11, wherein the further driving means (77, 78) are mounted in the processing station (16).

13. A machine according to any one of the preceding claims, wherein the operating unit (22, 28, 29, 30) comprises a cutting device (28), which is movable around a rotation axis (28a), which is transverse to the first direction (4).

## Patentansprüche

1. Maschine zur Bearbeitung von Profilstangen (2), insbesondere aus Aluminium, Leichtmetalllegierungen, PVC oder dergleichen, wobei die Maschine eine längliche Basis (3), die sich in einer ersten Richtung (4) erstreckt; mindestens eine Bearbeitungsstation (16), die entlang der Basis (3) bereitgestellt ist und mit mindestens einer Betriebseinheit (22, 28, 29, 30) zur Bearbeitung der Profilstangen (2) versehen ist; und mindestens eine Greifvorrichtung (34) zum Halten mindestens einer Profilstange (2) umfasst, wobei die Greifvorrichtung (34) einen ersten Klemm-Spannstock (66) umfasst, der wiederum eine erste Backe (67) und eine zweite Backe (70) umfasst, die relativ zueinander in einer zweiten Richtung (10), die quer zu der ersten Richtung (4) verläuft, zwischen einer Klemmposition und einer Freigabeposition zum Klemmen und Freigeben der Profilstange (2) bewegbar sind; und **dadurch gekennzeichnet ist, dass** sie ferner eine Antriebsvorrichtung (79) zum Bewegen der zweiten Backe (70) in Bezug auf die erste Backe (67) in einer dritten Richtung (15) umfasst, die orthogonal zu der ersten und der zweiten Richtung (4, 10) verläuft; wobei die Antriebsvorrichtung (79) ein Greifglied (81), das zwischen einer Betriebsposition, in der das Greifglied (81) mit der zweiten Backe (70) in Eingriff steht, und einer Ruheposition, in der das Greifglied (81) mit der zweiten Backe (70) außer Eingriff steht, bewegbar ist, und Antriebsmittel (80) zum Bewegen des Greifglieds (81) und somit der zweiten Backe (70) in der dritten Richtung (15) umfasst.

2. Maschine nach Anspruch 1, wobei das Greifglied (81) in der zweiten Richtung (10) zwischen der Betriebsposition und der Freigabeposition bewegbar ist.

3. Maschine nach einem der vorhergehenden Ansprüche, wobei die Antriebsvorrichtung (79) in der Bearbeitungsstation (16) montiert ist.

4. Maschine nach einem der vorhergehenden Ansprüche und ferner umfassend eine Entladestation (12), die entlang der Basis (3) erhalten wird, um die Profilstangen (2) von dem ersten Klemm-Spannstock (66) zu entladen; wobei der erste Klemm-Spannstock (66) entlang der Basis (3) zwischen der Bearbeitungsstation (16) und der Entladestation (12) bewegbar ist.

5. Maschine nach einem der vorhergehenden Ansprüche, wobei die Greifvorrichtung (34) ferner einen zweiten Klemm-Spannstock (61) umfasst, der wiederum eine dritte Backe (62) und eine vierte Backe (63) umfasst, die relativ zueinander in der dritten Richtung (15) zwischen einer Klemmposition und einer Freigabeposition zum Klemmen und Freigeben der Profilstange (2) bewegbar sind.

6. Maschine nach Anspruch 5, wobei der zweite Klemm-Spannstock (61) in der Bearbeitungsstation (16) montiert ist.

7. Maschine nach Anspruch 5 oder 6, wobei der zweite Klemm-Spannstock (61) mit einer Lagerrolle (83) für die Profilstangen (2) zusammenwirkt; wobei die dritte Backe (62) und die Lagerrolle (83) relativ zueinander quer zu der ersten Richtung (4) bewegbar sind.

8. Maschine nach einem der vorhergehenden Ansprüche, wobei die erste und die zweite Richtung (4, 10) im Wesentlichen horizontal verlaufen und die dritte Richtung (15) im Wesentlichen vertikal verläuft.

9. Maschine nach einem der vorhergehenden Ansprüche und ferner umfassend eine Verriegelungsvorrichtung (74) zum Verriegeln der zweiten Backe (70) in der dritten Richtung (15).

10. Maschine nach Anspruch 9, wobei die Verriegelungsvorrichtung (74) ein Verriegelungsglied (75), das zwischen einer Verriegelungsposition und einer Freigabeposition zum Verriegeln und Freigeben der zweiten Backe (70) bewegbar ist, und weitere Antriebsmittel (77, 78) zum Bewegen des Verriegelungsglieds (75) zwischen seiner Verriegelungs- und Freigabeposition umfasst.

11. Maschine nach Anspruch 10, wobei das Verriegelungsglied (75) an dem ersten Klemm-Spannstock (66) montiert ist.

12. Maschine nach Anspruch 10 oder 11, wobei die weiteren Antriebsmittel (77, 78) in der Bearbeitungsstation (16) montiert sind.

13. Maschine nach einem der vorhergehenden Ansprüche, wobei die Betriebseinheit (22, 28, 29, 30) eine Schneidvorrichtung (28) umfasst, die um eine Drehachse (28a) bewegbar ist, die quer zu der ersten Richtung (4) verläuft.

## Revendications

1. Machine pour traiter des barres de section (2), en particulier en aluminium, en alliages légers, en PVC ou similaire, la machine comprenant une base allongée (3) s'étendant dans une première direction (4) ; au moins une station de traitement (16) qui est prévue le long de la base (3) et est prévue avec au moins une unité opérationnelle (22, 28, 29, 30) pour traiter les barres de section (2) ; et au moins un dispositif de préhension (34) pour maintenir au moins une barre de section (2), le dispositif de préhension (34) comprenant un premier étau de serrage (66) comprenant à son tour, une première mâchoire (67) et une deuxième mâchoire (70) qui sont mobiles l'une par rapport à l'autre dans une deuxième direction (10) qui est transversale par rapport à la première direction (4), entre une position de serrage et une position de libération pour serrer et libérer la barre de section (2) ; et étant **caractérisée en ce qu'**elle comprend en outre un dispositif d'entraînement (79) pour déplacer la deuxième mâchoire (70) par rapport à la première mâchoire (67) dans une troisième direction (15) qui est orthogonale auxdites première et deuxième directions (4, 10) ; le dispositif d'entraînement (79) comprenant un élément de préhension (81) qui est mobile entre une position opérationnelle, dans laquelle l'élément de préhension (81) met en prise la deuxième mâchoire (70) et une position de repos, dans laquelle l'élément de préhension (81) dégage la deuxième mâchoire (70), et des moyens d'entraînement (80) pour déplacer l'élément de préhension (81) et par conséquent la deuxième mâchoire (70) dans la troisième direction (15).

2. Machine selon la revendication 1, dans laquelle l'élément de préhension (81) est mobile dans la deuxième direction (10) entre la position opérationnelle et la position de libération.

3. Machine selon l'une quelconque des revendications précédentes, dans laquelle le dispositif d'entraînement (79) est monté dans la station de traitement (16).

4. Machine selon l'une quelconque des revendications précédentes et comprenant en outre une station de décharge (12) qui est obtenue le long de la base (3) afin de décharger les barres de section (2) du premier étau de serrage (66) ; le premier étau de serrage (66) étant mobile le long de la base (3) entre la station de traitement (16) et la station de décharge (12).

5. Machine selon l'une quelconque des revendications précédentes, dans laquelle le dispositif de préhension (34) comprend en outre un second étau de serrage (61) comprenant, à son tour, une troisième mâchoire (62) et une quatrième mâchoire (63) qui sont mobiles l'une par rapport à l'autre dans la troisième direction (15) entre une position de serrage et une position de libération afin de serrer et de libérer la barre de section (2).

6. Machine selon la revendication 5, dans laquelle le second étau de serrage (61) est monté dans la station de traitement (16).

7. Machine selon la revendication 5 ou 6, dans laquelle le second étau de serrage (61) coopère avec un galet de roulement (83) pour les barres de section (2) ; la troisième mâchoire (62) et le galet de roulement (83) étant mobiles l'un par rapport à l'autre transversalement par rapport à la première direction (4) .

8. Machine selon l'une quelconque des revendications précédentes, dans laquelle lesdites première et deuxième directions (4, 10) sont sensiblement horizontales et ladite troisième direction (15) est sensiblement verticale.

9. Machine selon l'une quelconque des revendications précédentes et comprenant en outre un dispositif de verrouillage (74) pour verrouiller la deuxième mâchoire (70) dans la troisième direction (15).

10. Machine selon la revendication 9, dans laquelle le dispositif de verrouillage (74) comprend un élément de verrouillage (75) qui est mobile entre une position de verrouillage et une position de libération afin de verrouiller et de libérer la deuxième mâchoire (70) et des moyens d'entraînement (77, 78) supplémentaires pour déplacer l'élément de verrouillage (75) entre ses positions de verrouillage et de libération.

11. Machine selon la revendication 10, dans laquelle l'élément de verrouillage (75) est monté sur le premier étau de serrage (66).

12. Machine selon la revendication 10 ou 11, dans laquelle les moyens d'entraînement (77, 78) supplémentaires sont montés dans la station de traitement (16).

13. Machine selon l'une quelconque des revendications précédentes, dans laquelle l'unité opérationnelle (22, 28, 29, 30) comprend un dispositif de coupe (28) qui est mobile autour d'un axe de rotation (28a) qui est transversal par rapport à la première direction (4).
